# EUROPEAN PATENT SPECIFICATION

(11) **EP 0 911 487 B1**
(45) Date of publication and mention of the grant of the patent: **05.01.2005**
(21) Application number: 98914066.0
(22) Date of filing: 17.04.1998
(51) Int. Cl.: F01D 5/18, F01D 5/08

(54) **GAS TURBINE COOLING MOVING BLADES**
KÜHLUNG VON ROTORSCHAUFELN IN GASTURBINEN
PALES MOBILES DE REFROIDISSEMENT DE TURBINE A GAZ

(30) Priority: 23.04.1997 JP 10592897
(43) Date of publication of application: 28.04.1999
(73) Proprietor: Mitsubishi Heavy Industries, Ltd., Tokyo 100-8315 (JP)
(72) Inventor: TOMITA, Yasuoki, Mitsubishi Heavy ind. Ltd., Hyogo-ken 676-0008 (JP); FUKUNO, Hiroki, Mitsubishi Heavy Ind. Ltd., Hyogo-ken 676-0008 (JP); AOKI, Sunao, Mitsubishi Heavy Ind. Ltd., Hyogo-ken 676-0008 (JP); SUENAGA, Kiyoshi, Mitsubishi Heavy Ind. LTd., Hyogo-ken 676-0008 (JP)
(74) Representative: Henkel, Feiler & Hänzel
(86) International application number: PCT/JP1998/001765
(87) International publication number: WO 1998/048150

(56) References cited:
- US-A- 3 565 545
- US-A- 3 791 758
- US-A- 4 178 129
- US-A- 4 807 433

## Description

### BACKGROUND OF THE INVENTION:

### Field of the Invention:

The present invention relates to a gas turbine first stage moving blade cooling assembly as defined by the features of the preamble portion of the claim.

### Description of the Prior Art:

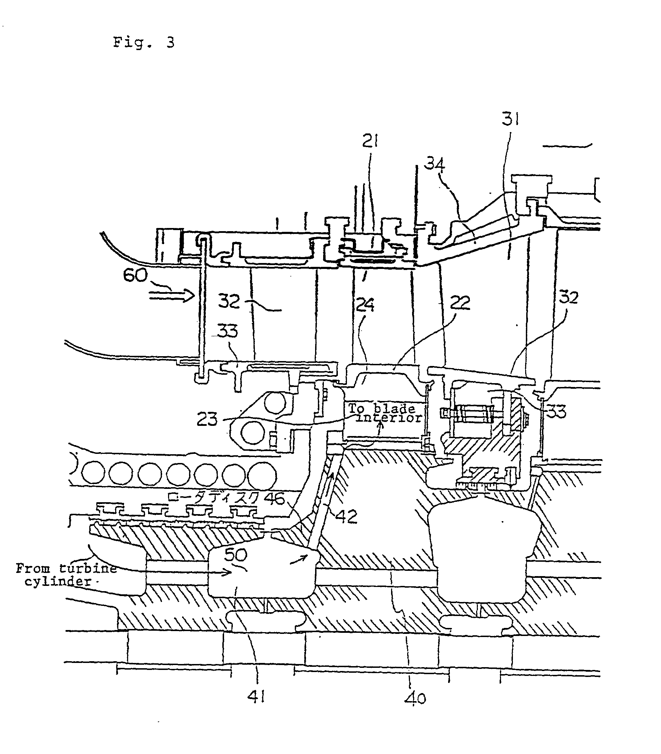

Fig. 3 is a cross sectional view showing a prior art air cooling system of moving blade in a gas turbine inlet portion. In the figure, numeral 21 designates a moving blade of first stage, numeral 22 designates a platform thereof, numeral 23 designates a blade root portion and numeral 24 designates a shank portion of a radial inner portion of the platform 22. Numeral 31 designates a stationary blade, which is adjacent to the moving blade 21, numeral 32 designates an inner shroud thereof, numeral 33 designates a cavity in a radial inner portion of the inner shroud 32 and numeral 34 designates an outer shroud. Numeral 40 designates a rotor disc, numeral 41 designates a disc cavity and numeral 42 designates a radial hole, which is bored in the rotor disc 40 for supplying therethrough a cooling air.

The moving blade 21 is arranged alternately with the stationary blade 31 in a rotor axial direction and is fixed to the rotor disc 40 in plural pieces along a rotor circumferential direction, so that a rotor may be driven rotatably by combustion gas 60 coming from a combustor.

In the gas turbine constructed as above, cooling of the moving blade is done by cooling air, for which a portion of rotor cooling air is used. That is, cooling air 50 flows into the disc cavity 41 to be led into the blade root portion 23 via the radial hole 42 provided in the rotor disc 40 and then, passing through the shank portion 24 and the platform 22, flows into an air passage (not shown) provided in a blade interior for cooling of the blade and is discharged into a combustion gas passage through a blade surface or a blade trailing edge portion.

In the prior art cooling of the gas turbine moving blade, cooling air from a rotor cooling system is led from the disc cavity 41 into the air passage for cooling of the moving blade through the radial hole 42, the blade root portion 23, the shank portion 24 and the platform 22, as mentioned above.

However, on the way of the cooling air 50 being led into the moving blade 21 interior, the cooling air receives heat of the rotor disc etc. to be elevated of temperature, and pressure thereof is also lowered, so that there occurs a loss until the cooling air is supplied into the air passage in the moving blade 21. Thus, in order to enhance the cooling efficiency, it is required to reduce such temperature elevation and pressure loss of the cooling air to the extent possible.

US-A-3 791 758 discloses a cooling assembly for the moving blade of a gas turbine with the structural features of the preamble portion of the claim. The cooling air passage for ejecting the cooling air from the stationary structure towards the shank portion of the moving blade is comparatively short and the passages are inclined with respect to the rotational axis in the rotational direction so that they extend more or less in the same radial direction from the axis of the rotation of the moving blade.

Further moving blade cooling assemblies for a gas turbine are disclosed in US-A-4 178 129 and US-A-4 807 433 in which the cooling air passages are inclined in the rotational direction of a moving blade. The cooling structures of US-A-4 807 433 and of US-A-3 565 545 are similar to the structure shown in fig. 3.

US-A-4 047 837 discloses a further gas turbine moving blade cooling assembly which has through holes which extend parallel to the rotor axis through a portion of the rotor disk for the purpose of establishing a communication for a flow between the high pressure side and the low pressure side of the rotor disc by connecting two chambers on the high- and low-pressure sides of the rotor disk.

### SUMMARY OF THE INVENTION:

In view of the prior art it is an object of the present invention to provide an improved gas turbine first stage moving blade cooling assembly which provides reduced temperature elevation to the extent possible and reduced pressure loss resulting in enhancement of the cooling efficiency.

It is a further aspect of the present invention to provide an improved gas turbine first stage moving blade cooling assembly in which the cooling air passage is directed optimally to a rotating moving blade so that the cooling air is supplied into the moving blade efficiently.

In order to attain this object, the present invention provides a gas turbine first stage moving blade cooling assembly as defined in the single claim 1.

In the invention, the cooling air from the turbine cylinder flows into one end of the cooling air passage and is jetted from the other end thereof into the space between the stationary blade and the moving blade toward the air inflow hole provided in the shank portion of the moving blade. The cooling air so jetted reaches the air inflow hole to flow thereinto to be further led into the moving blade for cooling thereof through the shank portion and the platform.

Thus, according to the invention, there is needed no such a radial hole in the prior art as provided in the rotor disc of the moving blade and the cooling air is jetted toward the air inflow hole of the moving blade with a shortest length from below the stationary blade, thereby temperature elevation of the cooling air on the way to the moving blade can be suppressed to the minimum and pressure loss thereof can be also reduced and cooling performance of the moving blade is enhanced.

In the invention, the cooling air passage is directed to the position deviated by a predetermined angle in the rotational direction of the moving blade from the position of the air inflow hole of the time when the moving blade stands still, and when the moving blade and thus the air inflow hole rotate, then the cooling air is jetted in the jetted velocity corresponding to the moving velocity of the air inflow hole so that the cooling air reaches the air inflow hole in time, thereby the cooling air can be supplied in the optimal direction while the moving blade rotates and the effect of the invention above can be enhanced further.

### BRIEF DESCRIPTION OF THE DRAWINGS:

Fig. 1 is a cross sectional view of a blade root portion of a gas turbine cooled moving blade of one embodiment according to the present invention.
Fig. 2 is an explanatory view of jetting of a cooling air in the gas turbine cooled moving blade of said embodiment, wherein Fig. 2(a) is a perspective view thereof and Fig. 2(b) is a view showing relation between rotational velocity of the moving blade and jetted velocity of the cooling air.
Fig. 3 is a cross sectional view showing a prior art air cooled system of moving blade in a gas turbine inlet portion.

### DESCRIPTION OF THE PREFERRED EMBODIMENTS:

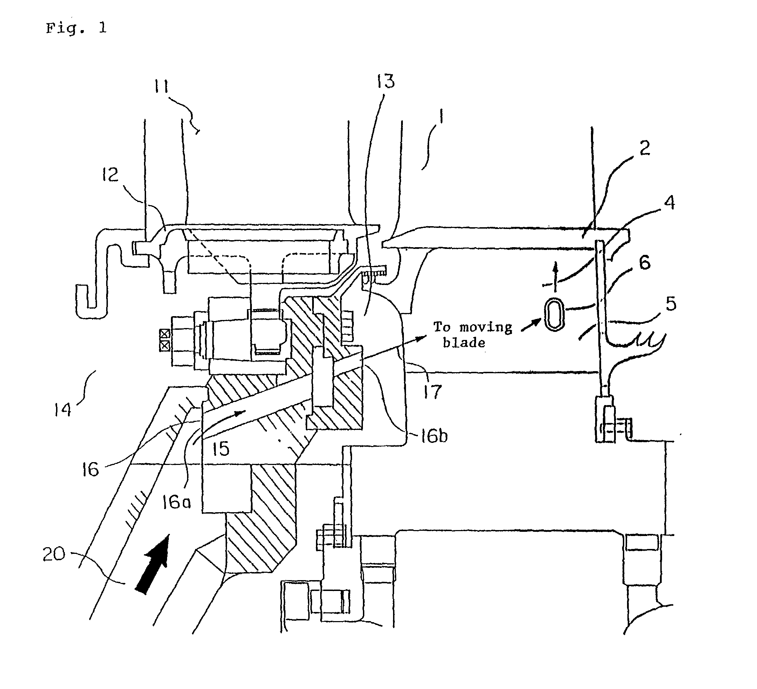

Herebelow, embodiments according to the present invention will be described concretely with reference to the figures. Fig. 1 is a cross sectional view of a blade root portion of a gas turbine moving blade cooling assembly of one embodiment according to the present invention. In Fig. 1, numeral 1 designates a moving blade of first stage and numeral 2 designates a platform thereof. There is provided a seal pin between two platforms which are mutually adjacent along a rotor circumferential direction for sealing a space between said two platforms. Numeral 4 designates a shank portion of a radial inner portion of the platform 2, numeral 5 designates a blade root portion and numeral 6 designates an air inflow hole provided in a side surface of the shank portion 4.

Numeral 11 designates a stationary blade of first stage, which is adjacent to the moving blade 1 and numeral 12 designates an inner shroud thereof. Numeral 13 designates a space between the stationary blade 11 and the moving blade 1, numeral 14 designates a turbine cylinder and numeral 15 designates a turbine cylinder wall. Numeral 16 designates a cooling air passage, which is bored in the turbine cylinder wall so as to pass therethrough and connects at its one end 16a to the turbine cylinder 14 and at its the other end 16b to the space 13 openingly.

Said cooling air passage 16 is formed in a straight line which is inclined radially outwardly in the turbine cylinder wall 15 below the stationary blade 11 and its axis 17 is directed to the air inflow hole 6 of the shank portion 4 of the adjacent moving blade 1 so that cooling air jetted from the cooling air passage 16, as described later, reaches in time the air inflow hole 6 of the moving blade 1, while it is rotating, to flow thereinto efficiently.

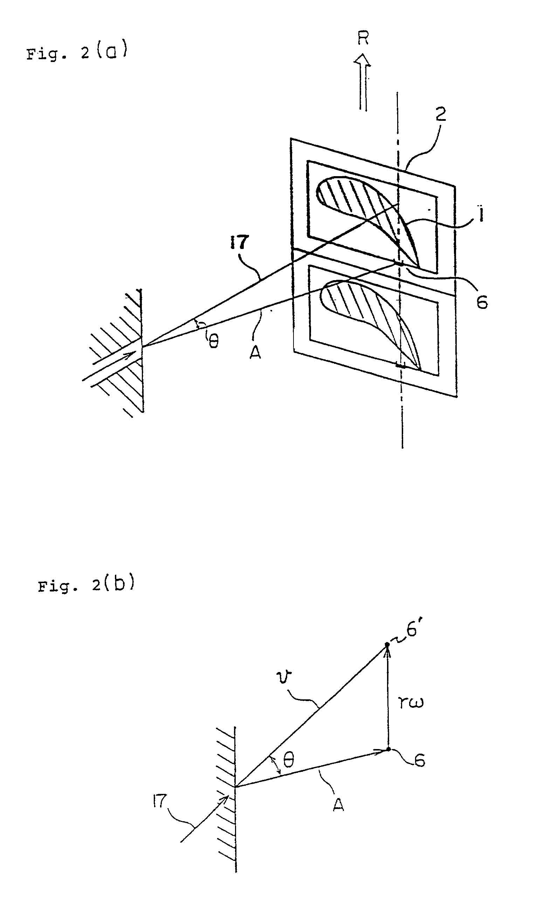

Fig. 2 shows a relationship between a direction of the cooling air passage 16 and the air inflow hole 6 of the moving blade 1, wherein Fig. 2(a) shows the relation between the cooling air passage 16 and the air inflow hole 6 when the moving blade 1 stands still in a row with the stationary blade along a rotor axial direction and Fig. 2(b) shows the relation between the cooling air passage 16 and the air inflow hole 6 when the moving blade 1 rotates in a rotor rotational direction R with an angular velocity ω.

In Fig. 2, in the state of the moving blade 1 standing still as shown in Fig. 2(a), the axis 17 of the cooling air passage 16 is set with a deviation of angle θ toward the rotor rotational direction R from a direction to the air inflow hole 6 (line A) along its rotational circumference, which is on account of consideration of a jetted velocity of the cooling air. Usually, if the cooling air is jetted toward the direction of line A, it will reach the air inflow hole 6 with a shortest length to flow into the shank portion 4 of the lower portion of the platform 2, but actually the moving blade 1 rotates and the axis 17 is directed deviatedly so as to meet an amount of movement in a rotational velocity of the moving blade 1.

The relation between the cooling air passage 16 and the air inflow hole 6 in said state is shown in Fig. 2(b). Where a correct direction in which the cooling air flows into the air inflow hole 6 when the moving blade stands still is shown by A, the air inflow hole 6, rotating in the angular velocity ω, rotates in a rotational velocity γω to come to a position 6'. On the other hand, the jetted velocity ν of the cooling air which is jetted from the cooling air passage 16 along the axis 17 is so set that the cooling air reaches the position 6' coincidentally, as shown in Fig. 2(b), and an angle between two directions along the axis 17 of the cooling air passage 16 and to the air inflow hole 6 at this time is shown as θ. Thus, an optimal direction to the air inflow hole 6 in which the rotation of the moving blade 1 is taken account of can be decided.

In the gas turbine moving blade constructed as mentioned above, cooling air 20 is led into the end portion 16a of the cooling air passage 16 provided in the turbine cylinder wall 15 below the stationary blade 11 and is jetted from the other end portion 16b thereof into the space 13. The jetted velocity of this cooling air is set to a predetermined velocity ν corresponding to the rotational velocity of the moving blade 1, as shown in Fig. 2(b). A jetting pressure at this time is nearly same as a pressure in the space 13 and a pressure in the shank portion 4 is lower than that in the space 13, hence the cooling air so jetted into the space 13 flows into the air inflow hole 6 easily.

The axis 17 of the cooling air passage 16 is deviated by an appropriate angle or distance in the rotational direction of the air inflow hole 6 as mentioned above, hence when the moving blade 1 rotates, the cooling air is jetted in the jetted velocity ν corresponding to the rotational velocity γω of the air inflow hole so as to pass through the space 13 to reach the air inflow hole 6 in time while it is rotating and then to flow into the shank portion 4 from the air inflow hole 6.

The cooling air which has entered the shank portion 4 is led into an air passage in the moving blade 1 for cooling thereof via an air passage (not shown) of a radial inner portion of the platform 2 and is discharged outside through a blade surface or a blade trailing edge portion. Thus, a shower head cooling, a film cooling and a slot cooling are effected.

According to the gas turbine cooled moving blade of the embodiment mentioned above, the construction is made such that the cooling air passage 16 is provided to pass through the turbine cylinder wall 15 radially inward of stationary blade 11 of first stage and is directed toward the air inflow hole 6 of the moving blade 1 in the optimal direction in which the rotational velocity is taken account of and the cooling air is jetted therefrom in the jetted velocity corresponding to the rotational velocity of the moving blade 1 so as to flow into the air inflow hole 6 via the space 13, thereby a passing route of the cooling air reaching the moving blade 1 is made shortest and there is no need of passing through the radial hole of the moving blade 1 as provided in the prior art, thus temperature elevation of the cooling air is suppressed to the minimum and pressure drop also can be suppressed with result that the cooling efficiency is enhanced

. The structure of the cooled moving blade of the present invention, especially as explained in Fig. 1, relates to the moving blade 1 of first stage and it will be more effective if said structure is applied to a case where the cooling air passage 16 can be provided linearly with a shortest length as in the turbine cylinder wall 15 of the stationary blade 11 of first stage and the cooling is applied to a moving blade which needs an enhanced cooling effect.

## Claims

1. A gas turbine first stage moving blade cooling assembly comprising:
a first stage moving blade (1) including a platform (2), and a shank portion (4) connected to a radial inner portion of said platform (2), wherein a sidewall of said shank portion (4) has a single air inflow hole (6) communicating with an interior of said first stage moving blade (1) ;
a first stage stationary blade (11) disposed adjacent to and upstream of said first stage moving blade (1);
a turbine cylinder (14) disposed radially inward of said first stage stationary blade (11); and
a linear cooling air passage (16) passing through a wall (15) of said turbine cylinder (14), said linear cooling air passage (16) being inclined by an inclination angle relative to the axis of rotation of said first stage moving blade (1) and establishing fluid communication between an interior of said turbine cylinder (14) and a space (13) defined between said first stage stationary blade (11) and said first stage moving blade (1) so that cooling air from the interior of said turbine cylinder (14) passes through said linear cooling air passage (16) and is jetted into said space (13) between said first stage stationary blade (11) and first stage moving blade (1) so as to flow into said air inflow hole (6),
wherein said linear cooling air passage (16) extends through the wall (15) of said turbine cylinder (14) along a straight line, and
wherein said cooling air passage (16) has a longitudinal axis (17) which is aligned with a position (6') that is deviated in a rotational circumferential direction from said air inflow hole (6) by an angle (θ) determined by a jetted velocity (ν) of cooling air jetted from said cooling air passage (16) and a rotational velocity (γω) of said moving blade (1),
**characterized in that** said linear cooling air passage (16) extends radially outward in a direction toward said air inflow hole (6) and away from the axis of rotation of said first stage moving blade (1)

## Patentansprüche

1. Kühlanordnung einer Laufschaufel der ersten Stufe einer Gasturbine mit:
einer Laufschaufel (1) der ersten Stufe mit einer Plattform (2) und einem Schaftabschnitt (4), der mit einem radialen inneren Abschnitt der Plattform (2) verbunden ist, wobei eine Seitenwand des Schaftabschnitts (4) ein einzelnes Lufteinströmloch (6) aufweist, das mit einem Inneren der Laufschaufel (1) der ersten Stufe in Verbindung steht,
einer Leitschaufel (11) der ersten Stufe, die angrenzend an und stromauf der Laufschaufel (1) der ersten Stufe angeordnet ist,
einem Turbinenzylinder (14), der radial einwärts der Leitschaufel (11) der ersten Stufe angeordnet ist, und
einem eine Wand (15) des Turbinenzylinders (14) durchsetzenden linearen Kühlluftdurchgang (16), wobei der lineare Kühlluftdurchgang (16) um einen Neigungswinkel relativ zu der Drehachse der Laufschaufel (1) der ersten Stufe geneigt bzw. schräggestellt ist und eine Fluidverbindung zwischen einem Inneren des Turbinenzylinders (14) und einem zwischen der Leitschaufel (11) der ersten Stufe und der Laufschaufel (1) der ersten Stufe festgelegten Raum (13) herstellt, so dass Kühlluft aus dem Innern des Turbinenzylinders (14) den linearen Kühlluftdurchgang (16) durchströmt und in den Raum (13) zwischen der Leitschaufel (11) der ersten Stufe und der Laufschaufel (1) der ersten Stufe ausgestoßen wird, um in das Lufteinströmloch (6) zu strömen,
wobei der lineare Kühlluftdurchgang (16) sich durch die Wand (15) des Turbinenzylinders (14) entlang einer geraden Linie erstreckt, und
wobei der Kühlluftdurchgang (16) eine Longitudinalachse (17) aufweist, die mit einer Position (6') ausgerichtet ist, welche in einer Drehumfangsrichtung von dem Lufteinströmloch (6) um einen Winkel (θ) abweicht, der durch eine Ausstoßgeschwindigkeit (ν) von von dem Kühlluftdurchgang (16) ausgestoßener Kühlluft und eine Drehgeschwindigkeit (γω) der Laufschaufel (1) bestimmt wird,
**dadurch gekennzeichnet, dass** der lineare Kühlluftdurchgang (16) sich radial nach außen in einer Richtung zu dem Lufteinströmloch (6) hin und von der Drehachse der Laufschaufel (1) der ersten Stufe weg erstreckt.

## Revendications

1. Assemblage de refroidissement d'aube mobile de premier étage d'une turbine à gaz comportant :
une aube (1) mobile de premier étage comportant une plate-forme (2), et une partie (4) de tige reliée à une partie radialement intérieure de la plate-forme (2), une paroi latérale de la partie (4) de tige ayant un trou (6) unique d'entrée d'air communiquant avec une partie intérieure de l'aube (1) mobile de premier étage ;
une aube (11) stationnaire de premier étage disposée au voisinage de l'aube (1) mobile de premier étage et en amont de celle-ci ;
un cylindre (14) de turbine disposé radialement vers l'intérieur de l'aube (1) stationnaire de premier étage ; et
un passage (16) d'air de refroidissement linéaire passant à travers une paroi (15) du cylindre (14) de turbine, le passage (16) d'air de refroidissement linéaire étant incliné suivant un angle d'inclinaison par rapport à l'axe de rotation de l'aube (1) mobile de premier étage et établissant une communication pour les fluides entre une partie intérieure du cylindre (14) de turbine et un espace (13) défini entre l'aube (11) stationnaire de premier étage et l'aube (1) mobile de premier étage, de sorte que de l'air de refroidissement provenant de l'intérieur du cylindre (14) de turbine passe par le passage (16) d'air de refroidissement linéaire et est envoyé sous forme de jet dans l'espace (13) entre la première aube (11) stationnaire de premier étage et l'aube (1) mobile de premier étage, de manière à s'écouler dans le trou (6) d'écoulement d'entrée d'air,
dans lequel le passage (16) linéaire d'air de refroidissement s'étend à travers la paroi (15) du cylindre (14) de turbine suivant une ligne droite, et
dans lequel le passage (16) d'air de refroidissement a un axe (17) longitudinal qui est aligné avec une position (6') qui est inclinée dans une direction circonférentielle en rotation par rapport au trou (6) d'entrée d'écoulement d'air d'un angle (θ) déterminé par une vitesse (v) de jet de l'air de refroidissement envoyé par jet du passage (16) d'air de refroidissement et par une vitesse (γω) de rotation de l'aube (1) mobile,
**caractérisé en ce que** le passage (16) d'air de refroidissement linéaire s'étend radialement vers l'extérieur, dans une direction vers le trou (6) de passage d'entrée d'air et en s'éloignant de l'axe de rotation de l'aube (1) mobile de premier étage.
